# EUROPÄISCHE PATENTSCHRIFT

(11) **EP 0 632 122 B1**
(45) Veröffentlichungstag und Bekanntmachung des Hinweises auf die Patenterteilung: **25.06.1997**
(21) Anmeldenummer: 94201404.4
(22) Anmeldetag: 18.05.1994
(51) Int. Cl.: C10J 3/84, B01D 45/06, B01D 46/30

(54) **Verfahren und Vorrichtung zum Abscheiden von Schlacketröpfchen aus einem heissen Rohgas aus der Verbrennung oder Vergasung fester oder flüssiger Brennstoffe**
Process and device for separating slag droplets from hot gases from combustion or gasification of solid or liquid fuels
Procédé et dispositif pour séparer des scories des gaz chauds de combustion ou gazéification des carburants solides ou liquides

(30) Priorität: 03.06.1993 DE 4318385
(43) Veröffentlichungstag der Anmeldung: 04.01.1995
(73) Patentinhaber: METALLGESELLSCHAFT AG, 60323 Frankfurt am Main (DE)
(72) Erfinder: Reimert, Rainer, Dr., D-65510 Idstein (DE); Vydra, Karel, Dr., D-61231 Bad Nauheim (DE)

(56) Entgegenhaltungen:
- EP-A- 0 358 923
- FR-A- 1 194 873
- US-A- 4 482 358

## Beschreibung

Die Erfindung betrifft ein Verfahren zum Abscheiden von Schlacketröpfchen aus einem Rohgas aus der Verbrennung oder Vergasung fester oder flüssiger Brennstoffe, wobei das Rohgas Temperaturen im Bereich von 1100 bis 1800°C und einen Druck von 1 bis 40 bar aufweist, sowie eine Vorrichtung hierzu.

Das Abscheiden von Flüssigkeitströpfchen aus Gasen mit relativ niedrigen Temperaturen ist bekannt und z.B. in EP-A-0 408 533 sowie im dazu korrespondierenden US-Patent 4 938 785 beschrieben. Bei der hierbei aus dem Gas abgeschiedenen Flüssigkeit handelt es sich jedoch nicht um flüssige Schlacke, die bei Temperaturen unterhalb von etwa 1100°C erstarrt. Der Erfindung liegt die Aufgabe zugrunde, das eingangs genannte Verfahren auf einfache Weise möglichst wirtschaftlich durchzuführen. Erfindungsgemäß geschieht dies dadurch, daß das die Schlacketröpfchen enthaltende Rohgas in einem Schlackeabscheider in einer Einlaßkammer durch eine erste Schüttung aus Füllkörpern abwärts in einen Strömungsumkehrraum strömt, im Strömungsumkehrraum nach oben umgelenkt wird und in einer Auslaßkammer durch eine zweite Schüttung aus Füllkörpern aufwärts zu einem Gasauslaß strömt, wobei die effektive Strömungsgeschwindigkeit des Verbrennungsgases im Bereich der ersten Schüttung 1,5 bis 10 mal so hoch wie im Bereich der zweiten Schüttung ist, und daß man flüssige Schlacke aus dem Strömungsumkehrraum abzieht.

Beim erfindungsgemäßen Verfahren benetzen die Schlacketröpfchen des heißen Rohgases in der Einlaßkammer die Oberfläche der Füllkörper. Die Schlacke fließt nach unten ab, wobei dieses Abfließen durch die Richtung der Gasströmung begünstigt wird. Nach der Umlenkung strömt das Gas mit verringerter Geschwindigkeit aufwärts vorbei an der Oberfläche der Füllkörper der Auslaßkammer, wobei restliche und auch zuvor mitgerissene Schlacketröpfchen abgeschieden werden. Durch die verringerte Gasgeschwindigkeit ist es der Schlacke möglich, im Gegenstrom zum Gas nach unten in den Strömungsumkehrraum und hin zum Schlackeabzug abzufließen.

Es ist nicht notwendig, daß das Rohgas in der Einlaßkammer exakt abwärts und in der Auslaßkammer exakt aufwärts strömt. Der Umlenkwinkel zwischen den Strömungsrichtungen des Rohgases in der Einlaßkammer und der Auslaßkammer kann im Bereich von 90° bis 180° liegen.

Die Schüttungen in der Einlaß- und Auslaßkammer können durch beliebige, an sich bekannte Maßnahmen ortsfest gehalten werden, z.B. durch Stützroste. Eine weitere Möglichkeit besteht darin, auch im Strömungsumkehrraum eine Schüttung, vorzugsweise aus relativ groben Füllkörpern vorzusehen, die dann auch die Schüttungen der beiden anderen Kammern trägt.

Vorzugsweise wird die Auslaßkammer weiter als die Einlaßkammer ausgebildet, damit so in der Auslaßkammer eine verlangsamte Strömungsgeschwindigkeit erreicht wird. Es empfiehlt sich, die Fläche des lichten Querschnitts, in einer horizontalen Ebene gemessen, in der Auslaßkammer mindestens 1,5 mal so groß wie in der Einlaßkammer auszubilden.

Bei den zu verwendenden Füllkörpern kann es sich z.B. um Kugeln, Raschigringe, Pallringe, Sattelkörper oder auch um zylindrische Körper handeln; ferner können unregelmäßige Körper verwendet werden, wie sie etwa durch Brechen von Naturmaterialien entstehen. Die Körper können auch Waben- oder Lamellenstruktur aufweisen. Es kann zweckmäßig sein, in der Einlaßkammer und der Auslaßkammer unterschiedlich geformte Körper zu verwenden, doch ist dies nicht unbedingt erforderlich. Kugeln mit Durchmessern im Bereich von 40 bis 120 mm eignen sich besonders für die Einlaßkammer und Kugeln mit Durchmessern im Bereich von 60 bis 150 mm für die Auslaßkammer.

Nach einer Weiterbildung der Erfindung leitet man das die Schlacketröpfchen enthaltende Rohgas zunächst durch einen das Rohgas umlenkenden Vorabscheider und anschließend durch den Schlackeabscheider mit Einlaßkammer, Strömungsumlenkraum und Auslaßkammer. Im Vorabscheider erfolgt eine grobe Abscheidung, wobei ein Teil der Schlacketröpfchen aus dem Rohgas entfernt wird; verbleibende Schlacketröpfchen werden im Schlackeabscheider aus dem Rohgas entfernt. Als Vorabscheider eignen sich z.B. ein oder mehrere Zyklone oder Vorrichtungen mit einmaliger oder mehrmaliger Umlenkung des Rohgases, wobei Schlacketröpfchen aufgrund ihrer Trägheit abgeschieden werden.

Zur Erfindung gehört eine Vorrichtung zur Durchführung des eingangs genannten Verfahrens, wobei ein Vorabscheider in der Einlaßkammer des Schlackeabscheiders angeordnet sein kann.

Die Brennstoffe, die für das Verfahren infrage kommen, können fest oder flüssig sein. Nur als Beispiel seien hier Kohle, z.B. Pulverkohle, Schweröl oder Abfallstoffe genannt. Das Rohgas kann z.B. zum Erzeugen von Dampf und/oder elektrischer Energie in einem Kraftwerk verwendet werden.

Ausgestaltungsmöglichkeiten des Verfahrens und der Vorrichtung werden mit Hilfe der Zeichnung erläutert. Es zeigt:
- Fig. 1: in schematischer Darstellung eine Rohgas erzeugende Anlage mit nachgeschaltetem Schlacketröpfchen-Abscheider im Längsschnitt,
- Fig. 2: einen Schnitt nach der Linie I-I durch den Abscheider der Fig. 1,
- Fig. 3: eine zweite Version des Schlackeabscheiders im Längsschnitt,
- Fig. 4: eine dritte Version des Schlackeabscheiders mit Vorabscheider im Längsschnitt,
- Fig. 5: eine vierte Version des Schlackeabscheiders mit integriertem Vorabscheider im Längsschnitt,
- Fig. 6: eine Darstellung zur Erläuterung der Definition des Umlenkwinkels und
- Fig. 7: eine fünfte Version des Schlackeabscheiders im Längsschnitt.

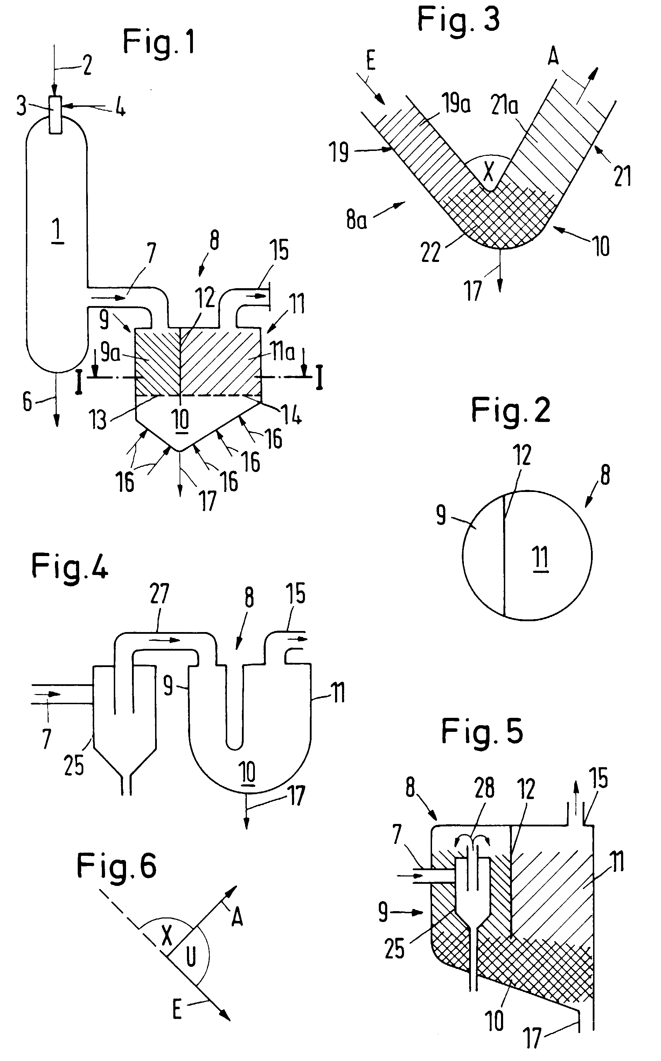

In der Brennkammer (1) der Fig. 1 wird ein Brennstoff bei Temperaturen von 1100 bis 1800°C verbrannt, wobei ein Rohgas und flüssige Schlacke entstehen. Der Brennstoff, z.B. flüssig oder fest, wird durch die Leitung (2) einem Brenner (3) zugeführt, in den man durch die Leitung (4) Luft einspeist. Flüssige Schlacke sammelt sich im unteren Bereich der Brennkammer (1) und wird kontinuierlich oder periodisch durch die Leitung (6) abgezogen. Eine Einrichtung zum Abziehen flüssiger Schlacke ist z.B. im US-Patent 4 487 612 beschrieben. Die Umsetzung in der Kammer (1) kann in bekannter Weise als Verbrennung oder aber als Vergasung mit partieller Oxidation des Brennstoffs betrieben werden.

Das Schlacketröpfchen enthaltende Rohgas, das Temperaturen im Bereich von 1100 bis 1800°C aufweist, verläßt die Brennkammer (1) durch die Leitung (7) und strömt zunächst zu einem Schlackeabscheider (8). Der Abscheider weist eine Einlaßkammer (9), einen Strömungsumkehrraum (10) und eine Auslaßkammer (11) auf, vgl. auch Fig. 2. Zwischen der Einlaßkammer (9) und der Auslaßkammer (11) ist eine Trennwand (12) angeordnet. In der Einlaßkammer (9) befindet sich auf einem Rost (13) eine erste Schüttung (9a) aus Füllkörpern und die Auslaßkammer (11) weist auf einem Rost (14) eine zweite Schüttung (11a) aus Füllkörpern auf. Die Füllkörper in den beiden Kammern, die durch Schraffuren angedeutet sind, können gleich oder unterschiedlich sein. In Fig. 2 wurden diese Schraffuren weggelassen.

Durch den lichten Querschnitt der beiden Kammern (9) und (11) sowie durch die Form und insbesondere die Größenverteilung der Füllkörper wird dafür gesorgt, daß die effektive Strömungsgeschwindigkeit des Verbrennungsgases im Bereich der ersten Schüttung (9a) größer ist als im Bereich der zweiten Schüttung (11a). Dadurch wird die Schlacke in der Einlaßkammer (9) wirksam nach unten zum Strömungsumkehrraum (10) geführt und die niedrigere Geschwindigkeit in der Auslaßkammer (11) vermeidet weitgehend, daß Schlacketröpfchen vom Rohgas nach oben mitgerissen werden und den Abscheider (8) durch den Auslaß (15) verlassen können.

Die Seiten der Wände des Schlackeabscheiders, die mit flüssiger Schlacke in Berührung kommen, können durch eine an sich bekannte Ausmauerung geschützt werden. Andererseits ist es möglich, diese Wände aus Stahl mit integrierten Kühlrohren auszubilden, wobei sich auf der Wand eine Schicht verfestigter Schlacke ausbildet, welche die Wand schützt. Es ist natürlich auch möglich, diese beiden Varianten in einem Schlackeabscheider an verschiedenen Stellen zu realisieren.

Es ist wichtig dafür zu sorgen, daß Schlacke, die in unerwünschter Weise erstarrt ist, erhitzt und wieder verflüssigt werden kann. Zu diesem Zweck sind Beheizungsbrenner (16) vorgesehen, die in an sich bekannter Weise mit flüssigem oder gasförmigem Brennstoff gespeist werden. Mit Hilfe dieser Brenner kann die Temperatur im unteren Bereich des Strömungsumkehrraums hoch genug gehalten werden und bereits erstarrte Schlacke läßt sich wieder verflüssigen. Flüssige Schlacke wird durch den Abzug (17) entfernt, für die Ausgestaltung dieses Abzugs wird auf das bereits erwähnte US-Patent 4 487 612 verwiesen.

Der in Fig. 3 schematisch dargestellte Schlackeabscheider (8a) hat die Form V-förmig miteinander verbundener Rohre. In der Einlaßkammer (19) strömt das heiße Verbrennungsgas aus der nicht dargestellten Brennkammer in Richtung des Pfeils (E) schräg abwärts durch eine Schüttung (19a) aus Füllkörpern zunächst in den Strömungsumkehrraum (10) und dann schräg aufwärts in Richtung des Pfeils (A) durch die Auslaßkammer (21) und deren Schüttung (21a). Der Raum (10) weist eine kreuzschraffiert dargestellte Schüttung (22) aus Füllkörpern auf, die als Stütze für die Schüttungen in der Einlaß- und der Auslaßkammer dient. Flüssige Schlacke wird durch die Leitung (17) abgezogen, Beheizungsbrenner zum Flüssighalten der Schlacke wurden in Fig. 3 der besseren Übersichtlichkeit wegen weggelassen.

Im Abscheider (8a) der Fig. 3 wird das von der Einlaßkammer (19) zur Auslaßkammer (21) strömende Verbrennungsgas um einen Umlenkwinkel (U) von 180° - X umgelenkt. In Fig. 6 ist der Umlenkwinkel (U) zwischen den Strömungspfeilen (E) und (A) der Vorrichtung gemäß Fig. 3 dargestellt. Zum Schlackeabscheider (8) der Fig. 1 gehört ein Umlenkwinkel von 180°, da die Strömungsrichtung in der Einlaßkammer (9) senkrecht abwärts und in der Auslaßkammer (11) senkrecht aufwärts verläuft.

Gemäß Fig. 4 gelangt das heiße Rohgas, das Schlacketröpfchen enthält, durch die Leitung (7) zunächst zu einem Vorabscheider (25), der in Form eines Zyklons ausgebildet ist. Ein Teil der Schlacketröpfchen wird hier aus dem Rohgas entfernt und fließt aus dem Zyklon nach unten ab. Das vorgereinigte Rohgas strömt durch den Verbindungskanal (27) zum nachfolgenden Schlackeabscheider (8), dessen Einlaßkammer (9) und Auslaßkammer (11) jeweils rohrförmig mit vertikalen, zylindrischen Wänden ausgebildet sind. Der die beiden Kammern (9) und (11) verbindende Strömungsumkehrraum (10) weist an der tiefsten Stelle einen Schlackeabzug (17) auf. In Fig. 4 wurde zur Vereinfachung auf Schraffuren in den Kammern (9) und (11) und im Raum (10) verzichtet. Abweichend von der Darstellung der Fig. 4 kann der Vorabscheider (25) auch mit einem anders gestalteten Schlackeabscheider, z.B. gemäß Fig. 1, verbunden sein.

Der Schlackeabscheider (8) gemäß Fig. 5 weist einen in der Einlaßkammer (9) angeordneten Vorabscheider (25) auf, in den das heiße, Schlacketröpfchen enthaltende Rohgas aus der Leitung (7) zur Vorreinigung zunächst eintritt. Das von Schlacketröpfchen teilweise befreite Rohgas strömt dann, wie durch die gebogenen Pfeile (28) angedeutet ist, nach unten durch die Einlaßkammer (9), durch den Strömungsumkehrraum (10) und dann aufwärts durch die Auslaßkammer (11) zum Gasauslaß (15). Zwischen den Kammern (9) und (11) ist die Trennwand (12) angeordnet, die Schraffuren deuten jeweils eine Schüttung von Füllkörpern an. Flüssige Schlacke verläßt den Abscheider (8) durch den Abzug (17). Abweichend von der Darstellung der Fig. 5 kann die im Zyklon (25) abgeschiedene flüssige Schlacke innerhalb des Raums (10) ebenfalls zum Schlackeabzug (17) geleitet werden.

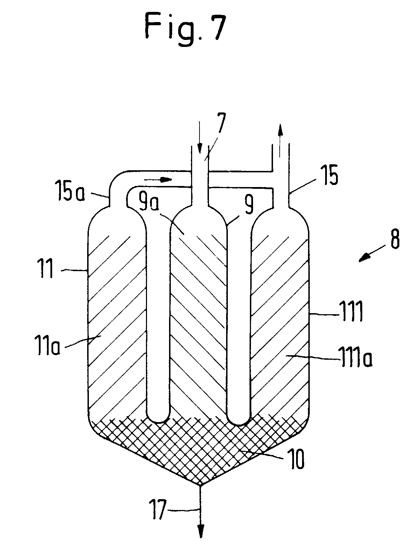

Beim Schlackeabscheider (8) der Fig. 7 befinden sich die Einlaßkammer (9) und die beiden Auslaßkammern (11) und (111) in zylindrischen Behältern mit gleichem Durchmesser, die Behälter sind durch den Strömungsumkehrraum (10) miteinander verbunden. Flüssige Schlacke wird durch die Leitung (17) abgezogen. Schlacketröpfchen enthaltendes Rohgas tritt durch die Leitung (7) in die Einlaßkammer (9) ein, strömt durch die erste Schüttung (9a) nach unten, verteilt sich auf die beiden Auslaßkammern (11) und (111), strömt darin aufwärts und verläßt die Auslaßkammern durch die Leitungen (15) und (15a).

### Beispiel:

In einer Brennkammer werden pro Stunde 91 t pulverförmige Steinkohle bei einem Druck von 16 bar mit Luftüberschuß (Lambda = 1,15) verbrannt, dabei entstehen 969 200 Nm³ Rohgas mit einer Temperatur von 1500°C. Die Steinkohle hat einen Aschegehalt von 7 Gew.%, in der Verbrennung entsteht daraus flüssige Schlacke. Die eine Hälfte der in der Brennkammer gebildeten Schlacke sammelt sich in einem Schlackesumpf und wird von dort entfernt, die andere Hälfte der Schlacke wird mit dem Rohgas zu einem Schlackeabscheider geführt. Dieser Schlackeabscheider (8) ist gemäß Fig. 7 ausgestaltet. Jede der 3 Kammern (9), (11) und (111) hat einen Innendurchmesser von 5,5 m, die Höhe der Schüttungen (9a), (11a) und (111a) beträgt 6 m. Alle Schüttungen, auch die im Strömungsumkehrraum (10), bestehen aus Kugeln aus ZrO₂, in den Kammern (9), (11) und (111) haben die Kugeln einen Durchmesser von 80 mm, und im Raum (10) beträgt der Kugeldurchmesser 120 mm.

In der Einlaßkammer (9) strömt das Rohgas mit einer Geschwindigkeit von 4,5 m/s, bezogen auf den leeren Querschnitt, nach unten zum Raum (10), wird umgelenkt und jeweils die halbe Gasmenge strömt dann durch die Kammer (11) bzw. (111) nach oben zum Gasabzug. In jeder der Kammern (11) bzw. (111) beträgt die Gasgeschwindigkeit 2,2 m/s, bezogen auf den leeren Querschnitt. Das Gas in den Abzugsleitungen (15) und (15a) weist einen Schlacke-Restgehalt von nur noch 15 mg/Nm³ auf, es kann einer Gasturbine zur Erzeugung elektrischer Energie zugeführt werden. Aus dem Abscheider (8) werden pro Stunde 3200 kg flüssige Schlacke abgezogen.

## Patentansprüche

1. Verfahren zum Abscheiden von Schlacketröpfchen aus einem Rohgas aus der Verbrennung oder Vergasung fester oder flüssiger Brennstoffe, wobei das Rohgas Temperaturen im Bereich von 1100 bis 1800°C und einen Druck von 1 bis 40 bar aufweist, dadurch gekennzeichnet, daß das die Schlacketröpfchen enthaltende Rohgas in einem Schlackeabscheider in einer Einlaßkammer durch eine erste Schüttung aus Füllkörpern abwärts in einen Strömungsumkehrraum strömt, im Strömungsumkehrraum nach oben umgelenkt wird und in einer Auslaßkammer durch eine zweite Schüttung aus Füllkörpern aufwärts zu einem Gasauslaß strömt, wobei die effektive Strömungsgeschwindigkeit des Verbrennungsgases im Bereich der ersten Schüttung 1,5 bis 10 mal so hoch wie im Bereich der zweiten Schüttung ist, und daß man flüssige Schlacke aus dem Strömungsumkehrraum abzieht.

2. Verfahren nach Anspruch 1, dadurch gekennzeichnet, daß der Umlenkwinkel zwischen den Strömungsrichtungen des Verbrennungsgases in der Einlaßkammer und der Auslaßkammer 90° bis 180° beträgt.

3. Verfahren nach Anspruch 1 oder 2, dadurch gekennzeichnet, daß das Verbrennungsgas im Strömungsumkehrraum durch eine Schüttung aus Füllkörpern strömt.

4. Verfahren nach einem der Ansprüche 1 bis 3, dadurch gekennzeichnet, daß die Fläche des lichten Querschnitts, in einer horizontalen Ebene gemessen, in der Auslaßkammer 1,5 bis 10 mal so groß ist wie in der Einlaßkammer.

5. Verfahren nach einem der Ansprüche 1 bis 4, dadurch gekennzeichnet, daß der untere Bereich des Strömungsumkehrraums beheizt wird.

6. Verfahren nach einem der Ansprüche 1 bis 5, dadurch gekennzeichnet, daß das die Schlacketröpfchen enthaltende Rohgas zunächst durch einen das Rohgas umlenkenden Vorabscheider und anschließend in die Einlaßkammer des Schlackeabscheiders geleitet wird.

7. Vorrichtung zum Abscheiden von Schlacketröpfchen aus einem Rohgas aus der Verbrennung oder Vergasung fester oder flüssiger Brennstoffe, wobei das Rohgas Temperaturen im Bereich von 1100 bis 1800°C und einen Druck im Bereich von 1 bis 40 bar aufweist, gekennzeichnet durch einen Schlackeabscheider mit einer Einlaßkammer, die eine erste Schüttung aus Füllkörpern aufweist, mindestens eine neben der Einlaßkammer angeordnete, eine zweite Schüttung aus Füllkörpern aufweisende Auslaßkammer, und einen unterhalb der Einlaßkammer und der Auslaßkammer angeordneten Strömungsumkehrraum mit Schlackeabzug.

8. Vorrichtung nach Anspruch 7, dadurch gekennzeichnet, daß in der Einlaßkammer ein Vorabscheider angeordnet ist.

## Claims

1. A method for separating slag droplets out of a crude gas from the combustion or gasification of solid or liquid fuels, the crude gas being at temperatures in the range of 1100 to 1800°C and a pressure of 1 to 40 bar, characterised in that the crude gas containing the slag droplets flows in a slag separator in an inlet chamber downwards through a first bed of packing into a flow-reversal space, is deflected upwards in the flow-reversal space and in an outlet chamber flows upwards through a second bed of packing to a gas outlet, the effective flow velocity of the combustion gas in the region of the first bed being 1.5 to 10 times as high as in the region of the second bed, and that liquid slag is removed from the flow-reversal space.

2. A method according to Claim 1, characterised in that the angle of deflection between the directions of flow of the combustion gas in the inlet chamber and the outlet chamber is 90° to 180°.

3. A method according to Claim 1 or 2, characterised in that the combustion gas flows through a bed of packing in the flow-reversal space.

4. A method according to one of Claims 1 to 3, characterised in that the surface area of the internal cross-section, measured in a horizontal plane, in the outlet chamber is 1.5 to 10 times as large as in the inlet chamber.

5. A method according to one of Claims 1 to 4, characterised in that the lower region of the flow-reversal space is heated.

6. A method according to one of Claims 1 to 5, characterised in that the crude gas containing the slag droplets is first passed through a pre-cleaner which deflects the crude gas and then into the inlet chamber of the slag separator.

7. An apparatus for separating slag droplets out of a crude gas from the combustion or gasification of solid or liquid fuels, the crude gas being at temperatures in the range of 1100 to 1800°C and a pressure in the range of 1 to 40 bar,-characterised by a slag separator with an inlet chamber which contains a first bed of packing, at least one outlet chamber arranged next to the inlet chamber and containing a second bed of packing, and a flow-reversal space with a slag tap arranged beneath the inlet chamber and the outlet chamber.

8. An apparatus according to Claim 7, characterised in that a pre-cleaner is arranged in the inlet chamber.

## Revendications

1. Procédé de séparation de gouttelettes de scorie d'un gaz brut provenant de la combustion ou de la gazéification de matières combustibles solides ou liquides, le gaz brut ayant des températures de l'ordre de 1100 à 1800°C et une pression de 1 à 40 bar, caractérisé en ce que le gaz brut renfermant les gouttelettes de scorie passe, dans un séparateur de scorie, dans une chambre d'entrée, à travers un premier tas de corps de garnissage, vers le bas dans une chambre d'inversion du sens du courant, est dévié vers le haut dans la chambre d'inversion du sens du courant et passe dans une chambre de sortie, à travers un deuxième tas de corps de garnissage, vers le haut pour aller à une sortie pour le gaz, la vitesse efficace d'écoulement du gaz de combustion dans la région du premier tas représentant 1,5 à 10 fois celle dans la région du deuxième tas et on soutire de la scorie liquide de la chambre d'inversion du sens du courant.

2. Procédé suivant la revendication 1, caractérisé en ce que l'angle d'inversion des sens du courant du gaz de combustion dans la chambre d'entrée et dans la chambre de sortie est compris entre 90° et 180°.

3. Procédé suivant la revendication 1 ou 2, caractérisé en ce que le gaz de combustion passe dans la chambre d'inversion du sens du courant à travers un tas de corps de garnissage.

4. Procédé suivant l'une des revendications 1 à 3, caractérisé en ce que la surface de la section transversale libre, mesurée dans un plan horizontal, de la chambre de sortie représente de 1,5 à 10 fois celle de la chambre d'entrée.

5. Procédé suivant l'une des revendications 1 à 4, caractérisé en ce que la partie inférieure de la chambre d'inversion du sens du courant est chauffée.

6. Procédé suivant l'une des revendications 1 à 5, caractérisé en ce que le gaz brut renfermant les gouttelettes de scorie passe d'abord dans un pré-séparateur faisant changer le gaz brut de direction et ensuite dans la chambre d'entrée du séparateur de scorie.

7. Installation de séparation de gouttelettes de scorie d'un gaz brut provenant de la combustion de la gazéification de combustibles solides ou liquides, le gaz brut ayant des températures de l'ordre de 1100 à 1800°C et une pression de l'ordre de 1 à 40 bar, caractérisé par un séparateur de scorie ayant une chambre d'entrée qui comporte un premier tas de corps de garnissage, au moins une chambre de sortie qui est disposée à côté de la chambre d'entrée et qui comporte un deuxième tas de corps de garnissage et une chambre d'inversion du sens du courant qui est disposée en-dessous de la chambre d'entrée et de la chambre de sortie et qui comporte une évacuation pour les scories.

8. Installation suivant la revendication 7, caractérisé en ce qu'il est prévu un pré-séparateur dans la chambre d'entrée.
